# EUROPEAN PATENT APPLICATION

(11) **EP 4 775 538 A1**
(43) Date of publication of application: **15.07.2026**
(21) Application number: 24877460.6
(22) Date of filing: 04.10.2024
(51) Int. Cl.: C01B 32/194, C01B 32/16, H01M 4/62, H01M 4/13, H01M 10/0525, H01B 1/04

(54) **COMPOSITE, CONDUCTIVE MATERIAL, ELECTRODE, AND SECONDARY BATTERY COMPRISING SAME**

(30) Priority: 13.10.2023 KR 20230136905; 02.10.2024 KR 20240134144
(71) Applicant: Dongjin Semichem Co., Ltd., Incheon 22824 (KR)
(72) Inventor: KIM, Do Hun, Hwaseong-si, Gyeonggi-do 18635 (KR); LEE, Joo Cheol, Hwaseong-si, Gyeonggi-do 18635 (KR); YANG, Hwi Chan, Hwaseong-si, Gyeonggi-do 18635 (KR); LEE, Chun Hyuk, Hwaseong-si, Gyeonggi-do 18635 (KR); KIM, Seung Du, Hwaseong-si, Gyeonggi-do 18635 (KR)
(74) Representative: Grünecker Patent- und Rechtsanwälte PartG mbB
(86) International application number: PCT/KR2024/015039
(87) International publication number: WO 2025/079922

(57) **Abstract**

Disclosed is a composite capable of reducing the resistance of a cell. According to an aspect, provided is a composite comprising graphene and carbon nanotubes on the graphene, wherein the ratio (I_{d}/I_{g}) of the intensity (I_{d}) of the D band to that (I_{g}) of the G band of the composite as measured by Raman spectroscopy is 1.00 or less.

## Description

### [Technical Field]

The present disclosure relates to a composite, and more specifically, relates to a composite, a conductive material, an electrode, and a secondary battery comprising the same.

### [Background Art]

Carbon atoms of graphite are connected in a hexagonal shape to form a two-dimensional layer structure, and such layers are stacked to form a layered structure. Graphene, which is one layer among such graphite, may have features in that tensile strength is about 200 times superior to steel, electron mobility is about 1,000 times superior to silicon, and thermal conductivity is about 10 times superior to copper. Due to such features, research for applying to various application fields such as a secondary battery, an ink, a barrier, heat dissipation, energy, a semiconductor, and a transparent electrode in a nanomaterial field is being progressed.

Meanwhile, carbon nanotubes are being used as a conductive material based on a wide specific surface area, high conductivity, and light characteristics. Such carbon nanotubes form a hollow cylindrical structure and may be manufactured by various methods such as an arc discharge method and a laser deposition method.

### [Disclosure]

### [Technical Problem]

According to one aspect of the present disclosure, there is provided a composite in which structural stability is improved, an impurity content within the composite is low, and powder conductivity is high.

According to another aspect of the present disclosure, there is provided a composite capable of lowering internal resistance of a cell and simultaneously preventing damage to a separator to further improve stability of a secondary battery.

According to still another aspect of the present disclosure, there is provided a manufacturing method of a composite in which a manufacturing process is simple and a manufacturing cost is reduced by not using a catalyst and a binder.

According to still another aspect of the present disclosure, there is provided a conductive material having excellent electrical characteristics.

According to still another aspect of the present disclosure, there is provided an electrode comprising the conductive material.

According to still another aspect of the present disclosure, there is provided a secondary battery capable of preventing damage to a separator and lowering resistance of a cell.

The objects of the present disclosure are not limited to the above-mentioned objects, and other objects and advantages of the present disclosure, which are not mentioned above, may be understood from the following descriptions and more clearly understood from the embodiment of the present disclosure. In addition, it can be easily understood that the objects and advantages of the present disclosure may be realized by means described in the specification and a combination thereof.

### [Technical Solution]

According to a first aspect of the present disclosure, provided is a composite comprising graphene; and carbon nanotubes on the graphene, wherein a ratio (I_{d}/I_{g}) of an intensity (I_{d}) of a D-band to an intensity (I_{g}) of a G-band of the composite as measured by Raman spectroscopy is 1.00 or less.

According to a second aspect of the present disclosure, in the first aspect, based on an X-ray diffraction (XRD) analysis method, the graphene may have a full width at half maximum (FWHM) of 6.5 to 20 at a (002) crystal plane.

According to a third aspect of the present disclosure, in the first or second aspect, a thickness of the graphene may be 1 to 100 nm.

According to a fourth aspect of the present disclosure, in any one of the first to third aspects, the carbon nanotubes may comprise at least one of single-walled carbon nanotubes and multi-walled carbon nanotubes.

According to a fifth aspect of the present disclosure, in any one of the first to fourth aspects, a length of the carbon nanotubes may be 10 to 20,000 nm.

According to a sixth aspect of the present disclosure, in any one of the first to fifth aspects, a ratio of a length of the graphene and the length of the carbon nanotubes may be 1:2 to 1:50,000.

According to a seventh aspect of the present disclosure, in any one of the first to sixth aspects, a weight ratio of the graphene and the carbon nanotubes may be 99:1 to 80:20.

According to an eighth aspect of the present disclosure, in any one of the first to seventh aspects, the graphene and the carbon nanotubes may be directly connected.

According to a ninth aspect of the present disclosure, in any one of the first to eighth aspects, a bonding angle of the graphene and the carbon nanotubes may be 1 to 90°.

According to a tenth aspect of the present disclosure, in any one of the first to ninth aspects, a powder density of the composite may be 1.00 g/cm³ or less, 0.95 g/cm³ or less, 0.92 g/cm³ or less, 0.88 g/cm³ or less, 0.75 g/cm³ or less, 0.71 g/cm³ or less, 0.65 g/cm³ or less, 0.63 g/cm³ or less, or 0.59 g/cm³ or less, and specifically, may be 0.3 g/cm³ or more and any one of the plurality of upper limits or less.

According to an eleventh aspect of the present disclosure, provided is a composite comprising graphene; and carbon nanotubes on the graphene, wherein a powder conductivity of the composite is 180 S/cm or more. Specifically, according to the eleventh aspect of the present disclosure, a composite having features of any one or more of the first to tenth aspects may be provided.

According to a twelfth aspect of the present disclosure, provided is a composite comprising graphene; and carbon nanotubes on the graphene, wherein an impurity content of the composite is 1,200 ppm or less. Specifically, according to the twelfth aspect of the present disclosure, a composite having features of any one or more of the first to eleventh aspects may be provided.

According to a thirteenth aspect of the present disclosure, provided is a conductive material comprising the composite according to any one of the first to twelfth aspects.

According to a fourteenth aspect of the present disclosure, provided is an electrode comprising the conductive material according to the thirteenth aspect.

According to a fifteenth aspect of the present disclosure, provided is a secondary battery comprising: a first electrode; a second electrode; a separator interposed between the first electrode and the second electrode; and an electrolyte solution; wherein at least one of the first electrode and the second electrode comprises the electrode according to the fourteenth aspect.

The technical solutions for solving the problems do not list all of the features of the present disclosure. Various features of the present disclosure and advantages and effects according thereto may be understood in more detail with reference to the specific description below.

### [Advantageous Effects]

According to one aspect of the present disclosure, a composite in which structural stability is improved, a content of impurities within the composite is low, and powder conductivity is high may be implemented.

According to another aspect of the present disclosure, internal resistance of a cell can be remarkably lowered, and simultaneously, stability of a secondary battery may be further improved by preventing damage to a separator.

According to another aspect of the present disclosure, a manufacturing method of a composite in which a manufacturing process is simple and a manufacturing cost is reduced by not using a catalyst and a binder may be implemented.

In addition to the above-described effects, specific effects of the present disclosure will be described together while describing specific details for carrying out the invention below. Also, the effects of the present disclosure are not limited to the effects mentioned above, and can be easily implemented by the means described in the specification and a combination thereof.

### [Mode for Disclosure]

In this specification, expressions in the singular include expressions in the plural unless the context clearly dictates otherwise.

In this specification, when a term expressed as a component includes a functional expression, it is not limited to the corresponding function, and may be defined as including other functions that can be clearly understood by those skilled in the art.

When a plurality of embodiments are described in this specification, each embodiment may be combinable unless specifically stated otherwise. At this time, the effects of the present disclosure may be defined as including effects originating from each embodiment and effects occurring as each embodiment is organically combined. For example, even if Embodiment 1 and Embodiment 2 are independently described in this specification, Embodiment 1 and Embodiment 2 may be organically combined with each other unless the context clearly dictates otherwise, and the effects of the present disclosure may include effects occurring by the combination of Embodiment 1 and Embodiment 2.

In this specification, a range of numerical values indicated using the term 'to' represents a range of numerical values including the values described before and after the term as a lower limit value and an upper limit value, respectively. When a plurality of numerical values are disclosed as the upper limit and the lower limit of any numerical range, respectively, the range of numerical values disclosed in this specification may be understood as any numerical range having any one value among the plurality of lower limit values and any one value among the plurality of upper limit values as the lower limit value and the upper limit value, respectively. For example, when it is described in the specification as a to b, or c to d, it may be understood that a or more and b or less, a or more and d or less, c or more and d or less, or c or more and b or less are described.

In this specification, terms such as "about" or "substantially" mean a reasonable amount of deviation of the modified term such that the final result does not significantly change. Such terms may be interpreted as including a deviation of at least ±5% or at least ±10% within the extent that the deviation does not modify and invalidate the meaning of the word.

According to one aspect of the present disclosure, provided is a composite comprising graphene; and carbon nanotubes on the graphene, wherein a ratio (I_{d}/I_{g}) of an intensity (I_{d}) of a D-band to an intensity (I_{g}) of a G-band of the composite as measured by Raman spectroscopy is 1.00 or less.

Generally, when graphene is used alone as a conductive material, there was a problem that it was difficult to secure a passage for ion migration due to the structure of graphene, and a problem occurred in which the exfoliated graphene was agglomerated into graphite due to a re-stacking phenomenon between surfaces of graphene, thereby deteriorating inherent characteristics of graphene. Also, when a composite is manufactured by physically mixing graphene and carbon nanotubes, a problem occurred in which agglomeration occurs between the carbon nanotubes and the graphene, thereby deteriorating dispersibility. Additionally, when a binder is used to connect graphene and carbon nanotubes, the binder acted as an insulator so that electrical conductivity of the conductive material could be lowered, and not only attachment characteristics were deteriorated at a connection portion between the graphene and the carbon nanotubes, but also a problem accompanied by heat generation due to an increase in resistance occurred. In another aspect, when catalyst particles are used instead of a binder, side reactions may occur during a charge/discharge process of a secondary battery due to metallic impurities, and there was a problem that a short circuit of the secondary battery is induced due to dendrites growing from the catalyst particles.

According to one aspect of the present disclosure, by satisfying the ratio (I_{d}/I_{g}) of the intensity (I_{d}) of the D-band to the intensity (I_{g}) of the G-band of the composite being 1.00 or less, internal resistance of a cell can be remarkably lowered, and simultaneously, stability of a secondary battery may be further improved by preventing damage to a separator.

According to another aspect of the present disclosure, provided is a composite comprising graphene; and carbon nanotubes on the graphene, wherein a powder conductivity of the composite is 180 S/cm or more. According to another aspect of the present disclosure, by satisfying the powder conductivity of the composite being 180 S/cm or more, internal resistance of a cell can be remarkably lowered, and simultaneously, stability of a secondary battery may be further improved by preventing damage to a separator.

According to still another aspect of the present disclosure, provided is a composite comprising graphene; and carbon nanotubes on the graphene, wherein an impurity content of the composite is 1,200 ppm or less. According to still another aspect of the present disclosure, by satisfying the impurity content being 1,200 ppm or less, internal resistance of a cell can be remarkably lowered, and simultaneously, stability of a secondary battery may be further improved by preventing damage to a separator.

Hereinafter, the configuration of the present disclosure will be described in more detail.

### 1. Composite

### Graphene

Graphene according to the present disclosure performs a role of a substrate in which carbon clusters are grown and can be converted into carbon nanotubes, and simultaneously, can improve conductivity of the composite together with carbon nanotubes to be described later.

Graphene according to the present disclosure may comprise at least any one of pure graphene, graphene oxide, and reduced graphene oxide, and specifically, may comprise reduced graphene oxide. Here, pure graphene is a two-dimensional planar structure composed only of carbon, and can be distinguished from graphene oxide and reduced graphene oxide. According to some embodiments of the present disclosure, when reduced graphene oxide is used as the graphene, conductivity may be further improved as an oxygen content becomes further lower compared to graphene oxide.

According to another example, the graphene may be graphene of a thin number of layers manufactured by various exfoliation methods such as graphene synthesized by an epitaxy method, graphene synthesized by a chemical vapor deposition method, and Scotch tape of HOPG graphene.

In some embodiments of the present disclosure, the oxygen content of the graphene may be 3% or less, 2% or less, or 1% or less, and specifically, may be 0.1% or more and any one of the plurality of upper limits or less. In some embodiments of the present disclosure, by satisfying the oxygen content of the graphene within the numerical range, rigidity and ductility of graphene can be controlled, and simultaneously, powder conductivity of the composite can be maintained at an appropriate level. For example, the oxygen content within the graphene can be analyzed through an elemental analyzer (EA) analysis method.

In some embodiments of the present disclosure, a carbon content of the graphene may be 85% or more, 90% or more, 95% or more, or 98% or more; 90% or less, 95% or less, or 98% or less; or any one or more of the plurality of lower limits and any one or less of the plurality of upper limits. In some embodiments of the present disclosure, by satisfying the carbon content of the graphene within the numerical range, migration of electrons and ions can be more smoothly performed through sp² bonding of carbon. For example, the carbon content within the graphene can be analyzed through an elemental analyzer (EA) analysis method.

In some embodiments of the present disclosure, based on an X-ray diffraction (XRD) analysis method, the graphene may have a full width at half maximum (FWHM) of 6.5 to 20, 7.5 to 18, 8.5 to 16, or 9.5 to 14 at a (002) crystal plane. Here, the full width at half maximum means a width of a point that becomes half of a maximum peak corresponding to the (002) crystal plane, and electrical conductivity may become higher as it is higher. According to some embodiments of the present disclosure, by satisfying the full width at half maximum of the graphene within the numerical range, thinly exfoliated graphene can effectively maintain a shape without being re-agglomerated.

In some embodiments of the present disclosure, purity of graphene may be 85% or more, 90% or more, or 95% or more. Here, what affects the purity of graphene may be impurities including metals, ash, moisture, and the like. According to some embodiments of the present disclosure, by satisfying the purity of the graphene within the numerical range, stability of graphene is improved and simultaneously conductivity can be sufficiently implemented. For example, in the case of metallic impurities included in the graphene, they can be analyzed through an inductively coupled plasma (ICP) analysis method, and in the case of non-metallic impurities, they can be analyzed through an elemental analyzer (EA) analysis method.

For example, a thickness of the graphene is not particularly limited, but may be 1 to 100 nm, 1 to 50 nm, 1 to 10 nm, or 1 to 3 nm.

For example, a manufacturing method of the graphene is not particularly limited, and may be an exfoliation method based on physical shear stress, a physical exfoliation method additionally using a surfactant or a dispersant, an electrical exfoliation method using an electrode, or an oxidative exfoliation method using an oxidizing agent, or the like.

For example, a shape of the graphene is not particularly limited, and may be any one selected from the group consisting of single-layer graphene, multi-layer graphene, and combinations thereof.

### Carbon nanotubes

Carbon nanotubes according to the present disclosure may be a structure distinguished from graphene or an independent compound, and specifically, may be a structure distinguished from graphene. Specifically, the carbon nanotubes have a wide specific surface area, high electrical conductivity, and light characteristics, and thus can improve conductivity of the composite.

Carbon nanotubes according to the present disclosure may comprise at least one of single-walled carbon nanotubes and multi-walled carbon nanotubes, and specifically, may comprise multi-walled carbon nanotubes. According to some embodiments of the present disclosure, by using multi-walled carbon nanotubes as the carbon nanotubes, mechanical strength and durability of the composite can be further improved within an extent that conductivity is not significantly deteriorated.

In some embodiments of the present disclosure, a length of the carbon nanotubes may be 10 to 20,000 nm, 10 to 2,000 nm, 10 to 1,000 nm, or 10 to 500 nm. Here, the length of the carbon nanotubes may be a length of a long axis passing through a center of the carbon nanotubes. According to some embodiments of the present disclosure, by satisfying the length of the carbon nanotubes within the numerical range, structural stability can be maintained on graphene.

In some embodiments of the present disclosure, a diameter of the carbon nanotubes may be 1 to 200 nm, 2 to 200 nm, 5 to 200 nm, or 50 to 200 nm. Here, the diameter of the carbon nanotubes may mean a diameter of a hollow tube shape. When the carbon nanotubes are multi-walled, the corresponding diameter can be measured based on the outermost wall of the carbon nanotubes. According to some embodiments of the present disclosure, by satisfying the diameter of the carbon nanotubes within the numerical range, structural stability can be maintained on graphene.

For example, the diameter and the length of the carbon nanotubes can be measured by SEM analysis.

### Coupling relationship between components

In some embodiments of the present disclosure, a ratio of a length of the graphene and a length of the carbon nanotubes may be 1:0.00002 to 1:50,000, 1:2 to 1:50,000, 1:3 to 1:50,000, 1:3 to 1:25,000, or 1:3 to 1:10,000. Here, the length of each of the graphene and the carbon nanotubes can be defined as a lateral size for the longest side. According to some embodiments of the present disclosure, by adjusting the ratio of the length of the graphene and the length of the carbon nanotubes within the numerical range, the carbon nanotubes secure structural stability on graphene and simultaneously can sufficiently improve conductivity of the composite. For example, the length of the graphene and the carbon nanotubes can be measured by SEM analysis.

In some embodiments of the present disclosure, a weight ratio of the graphene and the carbon nanotubes may be 99:1 to 80:20, 98:2 to 78:22, 95:5 to 84:16, or 90:10 to 85:15. According to some embodiments of the present disclosure, by satisfying the weight ratio of the graphene and the carbon nanotubes within the numerical range, internal resistance of a cell can be remarkably lowered by increasing powder conductivity of the composite. For example, the weight ratio of the graphene and the carbon nanotubes can be adjusted according to a gas injection amount, a type of gas, and the like in chemical vapor deposition (CVD). For example, the weight ratio of the graphene and the carbon nanotubes can be analyzed by measuring a weight before/after growth of the carbon nanotubes with an ultra-precision balance.

In some embodiments of the present disclosure, the graphene and the carbon nanotubes may be directly connected. Here, the meaning of being directly connected may mean that a member interposed in the graphene and the carbon nanotubes does not exist. For example, when there are a plurality of carbon nanotubes in the composite, at least one among the plurality of carbon nanotubes may be directly connected with graphene, and specifically, all carbon nanotubes may be directly connected with graphene. For example, when carbon nanotubes are attached on a surface of graphene using a binder, the binder is interposed between the graphene and the carbon nanotubes so that they may not be directly connected to each other. According to some embodiments of the present disclosure, by the graphene and the carbon nanotubes being directly connected, internal resistance of a cell can be remarkably lowered by increasing powder conductivity of the composite.

In some embodiments of the present disclosure, a bonding angle of the graphene and the carbon nanotubes may be 1 to 90°, 5 to 90°, 10 to 90°, or 35 to 90°. Here, the bonding angle of the graphene and the carbon nanotubes may mean an angle formed by any line on graphene (plane) and the carbon nanotubes (line) when assuming the graphene as a plane and assuming the carbon nanotubes as a line. According to some embodiments of the present disclosure, by satisfying the bonding angle of the graphene and the carbon nanotubes within the numerical range, structural stability of the composite is maintained and simultaneously powder conductivity of the composite can be sufficiently increased. For example, the bonding angle of the graphene and the carbon nanotubes can be measured by SEM analysis.

### Physical properties of composite

According to one aspect of the present disclosure a ratio (I_{d}/I_{g}) of an intensity (I_{d}) of a D-band to an intensity (I_{g}) of a G-band of the composite as measured by Raman spectroscopy is 1.00 or less. Specifically, the ratio (I_{d}/I_{g}) of the intensity (I_{d}) of the D-band to the intensity (I_{g}) of the G-band of the composite may be 0.95 or less, 0.90 or less, 0.88 or less, 0.84 or less, 0.82 or less, 0.80 or less, 0.78 or less, or 0.74 or less, and may be 0.10 or more and any one of the plurality of upper limits or less. Here, the ratio (I_{d}/I_{g}) of the intensity (I_{d}) of the D-band to the intensity (I_{g}) of the G-band of the composite represents structural quality of the composite, and a lower value may mean fewer defects. Here, the G-band is related to a carbon crystal structure, and the D-band is related to defects within the carbon structure. According to some embodiments of the present disclosure, by satisfying the ratio (I_{d}/I_{g}) of the intensity (I_{d}) of the D-band to the intensity (I_{g}) of the G-band of the composite within the numerical range, defects of the composite can be reduced, and accordingly, internal resistance of a cell can be remarkably lowered, and simultaneously, stability of a secondary battery may be further improved by preventing damage to a separator.

According to another aspect of the present disclosure, a powder conductivity of the composite may be 180 S/cm or more, 190 S/cm or more, 200 S/cm or more, 208 S/cm or more, 220 S/cm or more, 230 S/cm or more, 250 S/cm or more, 255 S/cm or more, or 260 S/cm or more, 270 S/cm or more, 280 S/cm or more, or 290 S/cm or more, and specifically, may be any one or more of the plurality of numerical values and 2,000 S/cm or less. Here, the powder conductivity is a physical characteristic representing electrical conductivity of the composite, and may be an index for measuring how freely electrons can migrate between particles within powder. According to some embodiments of the present disclosure, by satisfying the powder conductivity of the composite within the numerical range, internal resistance of a cell can be remarkably lowered, and simultaneously, stability of a secondary battery may be further improved by preventing damage to a separator.

According to still another aspect of the present disclosure, an impurity content of the composite may be 1,200 ppm or less, 1,100 ppm or less, 1,000 ppm or less, 900 ppm or less, 800 ppm or less, 700 ppm or less, 600 ppm or less, 500 ppm or less, 479 ppm or less, 328 ppm or less, 150 ppm or less, 147 ppm or less, or 130 ppm or less, and specifically, may be 0.001 ppm or more and any one of the plurality of numerical values or less. Specifically, the impurities may be defined as a total sum of a content of metallic impurities and a content of non-metallic impurities. Here, the content of metallic impurities is a sum total of metal ions analyzed through an inductively coupled plasma (ICP) analysis, and the content of non-metallic impurities is a sum total of element concentrations excluding C and O among C, O, S, N, and H obtained through an EA analysis for the composite. According to some embodiments of the present disclosure, by satisfying the content of impurities of the composite within the numerical range, internal resistance of a cell can be remarkably lowered, and simultaneously, stability of a secondary battery may be further improved by preventing damage to a separator.

In some embodiments of the present disclosure, based on an X-ray diffraction (XRD) analysis method, a full width at half maximum (FWHM) of the composite may be 7 or more, 8 or more, 9 or more, 10 or more, 11 or more, or 12 or more in 20 to 30° (20 section), and specifically, may be 7 to 14, 8 to 13, 9 to 13, 10 to 13, 11 to 13, or 12 to 13. According to some embodiments of the present disclosure, when the full width at half maximum of the composite satisfies the numerical range, an effect in which resistance of a cell becomes further lower may be implemented.

In some embodiments of the present disclosure, a powder density of the composite may be 1.00 g/cm³ or less, 0.95 g/cm³ or less, 0.92 g/cm³ or less, 0.88 g/cm³ or less, 0.75 g/cm³ or less, 0.71 g/cm³ or less, 0.65 g/cm³ or less, 0.63 g/cm³ or less, or 0.59 g/cm³ or less, and specifically, may be 0.3 g/cm³ or more and any one of the plurality of upper limits or less. Specifically, a reason why the powder density of the composite becomes lower may be because, as a growth length of carbon nanotubes becomes longer and an angle becomes larger, a distance between graphenes becomes farther and overall particles become farther. According to some embodiments of the present disclosure, by the powder density of the composite being adjusted within the numerical range, the distance between graphenes becomes farther, and a carbon nanotube content between graphene surfaces increases, so that re-agglomeration of graphene can be prevented during electrode formation, and an effect of improving powder conductivity can be implemented when utilized as a conductive material. For example, the powder density of the composite can be measured using a BT-302 tap density tester of Bettersize Co.

### Manufacturing method

A manufacturing method of a composite according to the present disclosure may comprise steps of: (S1) forming carbon clusters by heat-treating carbon particles on graphene; and (S2) forming carbon nanotubes by growing the carbon clusters in the graphene in which the carbon clusters are formed.

For example, in the step (S1), a heat treatment temperature and a heat treatment time are not particularly limited and may be variously modified. Specifically, the heat treatment temperature of the step (S1) may be performed at 600 to 900°C, and heat treatment may be applied through a chamber. Here, carbon particles can be agglomerated into carbon clusters through heat treatment, and the carbon clusters can perform a role of a seed capable of growing into carbon nanotubes. In this specification, "carbon cluster" may mean a structure in which carbon particles are agglomerated through a heat treatment process. Here, regarding a criterion for distinguishing carbon particles and carbon clusters, an average particle diameter of the carbon clusters may be 1 to 500 nm, 1 to 200 nm, 1 to 100 nm, or 1 to 50 nm. Here, the average particle diameter can be defined as a particle diameter (D50) when a cumulative percentage becomes 50% in a volume-based particle size distribution curve when measured by a laser diffraction particle size distribution measuring device.

For example, the step (S2) is not particularly limited but may be performed through a chemical vapor deposition method. Specifically, the chemical vapor deposition method can form carbon nanotubes directly connected with graphene by inducing growth of carbon clusters by injecting a reactive gas into a vacuum reactor at 800 to 1100°C.

The manufacturing method of a composite according to the present disclosure may be a method not using both catalyst particles and a binder. When a binder is used to connect graphene and carbon nanotubes, the binder acted as an insulator so that electrical conductivity of the conductive material could be lowered, and not only attachment characteristics were deteriorated at a connection portion between the graphene and the carbon nanotubes, but also a problem accompanied by heat generation due to an increase in resistance occurred. In another aspect, when catalyst particles are used instead of a binder, side reactions may occur during a charge/discharge process of a secondary battery due to metallic impurities, and a problem of causing a short circuit of the secondary battery occurred due to dendrites growing from metal, when the catalyst particles are applied to a graphene surface. According to some embodiments of the present disclosure, by not using both the catalyst particles and the binder, the problem is solved and simultaneously internal resistance of a cell can be remarkably lowered, and stability of a secondary battery can be further improved by preventing damage to a separator.

### 2. Conductive material

According to still another aspect of the present disclosure, provided is a conductive material comprising the composite. The conductive material according to some embodiments of the present disclosure is not particularly limited and can be applied to all types of electrochemical reaction devices, and specifically, can be applied to a secondary battery.

In some embodiments of the present disclosure, the conductive material may further comprise a sub-conductive material generally used in the corresponding technical field in addition to the above-described composite.

For example, the sub-conductive material is not particularly limited, and may be any one selected from the group consisting of graphite, carbon black, carbon fiber or metal fiber, metal powder, conductive whisker, conductive metal oxide, activated carbon, and polyphenylene derivatives, or a mixture of two or more types of conductive materials among them, and more specifically, may be a mixture of one type or two or more types of conductive materials selected from the group consisting of natural graphite, artificial graphite, super-p, acetylene black, ketjen black, channel black, furnace black, lamp black, thermal black, denka black, aluminum powder, nickel powder, zinc oxide, potassium titanate, and titanium oxide.

For example, based on a total weight of the conductive material, a content of the composite according to some embodiments may be 90 wt% or more, 91 wt% or more, 92 wt% or more, 93 wt% or more, 94 wt% or more, 95 wt% or more, 96 wt% or more, 97 wt% or more, 98 wt% or more, or 99 wt% or more; 91 wt% or less, 92 wt% or less, 93 wt% or less, 94 wt% or less, 95 wt% or less, 96 wt% or less, 97 wt% or less, 98 wt% or less, or 99 wt% or less; or any one or more of the plurality of lower limits and any one or less of the plurality of upper limits.

### 3. Electrode and secondary battery

According to still another aspect of the present disclosure, provided is an electrode comprising the conductive material. The electrode according to some embodiments of the present disclosure is not particularly limited and can be applied to all types of electrochemical reaction devices, and specifically, can be applied to a secondary battery.

According to still another aspect of the present disclosure, provided is a secondary battery comprising: a first electrode; a second electrode; a separator interposed between the first electrode and the second electrode; and an electrolyte solution; wherein at least one of the first electrode and the second electrode comprises the electrode of the above-described some embodiments.

For example, any one of the first electrode and the second electrode may be a positive electrode, and the other may be a negative electrode.

### Positive electrode

A positive electrode according to the present disclosure may comprise a positive electrode current collector and a positive electrode active material layer disposed on at least one surface of the positive electrode current collector. The positive electrode active material layer may comprise a positive electrode active material, a conductive material, and a positive electrode binder.

For example, the positive electrode current collector is not particularly limited as long as it has high conductivity without causing a chemical change to a battery. Specifically, as the positive electrode current collector, copper, stainless steel, aluminum, nickel, titanium, sintered carbon, one in which a surface of copper or stainless steel is surface-treated with carbon, nickel, titanium, silver, or the like, an aluminum-cadmium alloy, and the like may be used. The positive electrode current collector may typically have a thickness of 6 to 20 *µ*m.

For example, the positive electrode active material may comprise a lithium transition metal oxide. The lithium transition metal oxide may be at least one selected from the group consisting of Liₓ₁CoO₂(0.5<x1<1.3), Liₓ₂NiO₂(0.5<x2<1.3), Liₓ₃MnO₂(0.5<x3<1.3), Liₓ₄Mn₂O₄(0.5<x4<1.3), Liₓ₅(Niₐ₁Co_{b1}Mn_{c1})O₂(0.5<x5<1.3, 0<a1<1, 0<b1<1, 0<c1<1, a1+b1+c1=1), Liₓ₆Ni_{1-y1}Co_{y1}O₂(0.5<x6<1.3, 0<y1<1), Liₓ₇Co_{1-y2}Mn_{y2}O₂(0.5<x7<1.3, 0≤y2<1), Liₓ₈Ni_{1-y3}Mn_{y3}O₂(0.5<x8<1.3, O≤y3<1), Liₓ₉(Niₐ₂Co_{b2}Mn_{c2})O₄(0.5<x9<1.3, 0<a2<2, 0<b2<2, 0<c2<2, a2+b2+c2=2), Liₓ₁₀Mn_{2-z1}Ni_{z1}O₄(0.5<x10<1.3, 0<z1<2), Liₓ₁₁Mn_{2-z2}Co_{z2}O₄(0.5<x11<1.3, 0<z2<2), Liₓ₁₂CoPO₄(0.5<x12<1.3) and Liₓ₁₃FePO₄(0.5<x13<1.3).

For example, the positive electrode binder may be poly(vinylidene fluoride-co-hexafluoropropylene), poly(vinylidene fluoride-co-trichloroethylene), poly(methylmethacrylate), poly(ethylhexylacrylate), poly(butylacrylate), poly(acrylonitrile), poly(vinylpyrrolidone), poly(vinyl acetate), poly(ethylene-co-vinyl acetate), poly(ethylene oxide), polyacrylate, cellulose acetate, cellulose acetate butyrate, cellulose acetate propionate, cyano ethyl pullulan, cyano ethyl poly(vinylalcohol), cyanoethylcellulose, cyano ethylsucrose, pullulan, and carboxyl methyl cellulose, and the like, but is not limited thereto.

### Negative electrode

A manufacturing method of a negative electrode according to the present disclosure comprises steps of: preparing a negative electrode slurry comprising a negative electrode active material, a conductive material according to some embodiments, and a negative electrode binder; forming a negative electrode active material layer by coating and drying the negative electrode slurry on at least one surface of a negative electrode current collector; and rolling the current collector in which the negative electrode active material layer is formed.

The negative electrode current collector can perform a role of a passage for delivering electrons from the outside so that an electrochemical reaction occurs in the negative electrode active material or receiving electrons from the negative electrode active material and sending them to the outside. For example, as the negative electrode current collector, copper, stainless steel, aluminum, nickel, titanium, sintered carbon, or one in which a surface of aluminum or stainless steel is surface-treated with carbon, nickel, titanium, silver, or the like may be used, and specifically, a transition metal that adsorbs carbon well such as copper and nickel may also be used as a current collector. For example, a thickness of the negative electrode current collector may be 6 *µ*m to 55 *µ*m, but the thickness of the negative electrode current collector is not limited thereto.

In some embodiments of the present disclosure, the negative electrode slurry may further comprise at least one of a silicon-based negative electrode active material and a graphite-based active material. For example, the silicon-based negative electrode active material may comprise at least one selected from the group consisting of Si, Si, SiOx(0<x≤2), Si-C composite, and a Si-Y alloy (Y is any one element selected from the group consisting of alkali metals, alkaline earth metals, transition metals, Group 13 elements, Group 14 elements, and rare earth elements). For example, the graphite-based active material may comprise at least one selected from the group consisting of artificial graphite, natural graphite, graphitized carbon fiber, and graphitized mesocarbon microbeads.

The negative electrode binder can suppress separation between particles of the negative electrode active material (silicon negative electrode active material) or between a negative electrode and a current collector. As the negative electrode binder, a polymer commonly used for an electrode in the corresponding technical field can be used. Such a negative electrode binder may be the same as or different from the positive electrode binder, without limitation.

### Separator

A separator according to the present disclosure may be composed of a porous substrate, or may comprise a porous substrate and a coating layer.

A porous substrate according to the present disclosure is capable of providing a migration path of lithium ions while preventing a short circuit by electrically insulating a negative electrode and a positive electrode, and may be a porous structure having high resistance regarding an electrolyte solution and a fine diameter of pores.

As a constituent material of the porous substrate, an organic material or an inorganic material having electrical insulation may be used without being particularly limited. The porous substrate may comprise, for example, at least any one selected from the group consisting of polyolefin, polyethylene terephthalate, polybutylene terephthalate, polyacetal, polyamide, polycarbonate, polyimide, polyetheretherketone, polyethersulfone, polyphenylene oxide, polyphenylene sulfide, and polyethylene naphthalene, and specifically, may comprise polyolefin. Polyolefin not only has excellent applicability but also can increase capacity per volume by increasing a ratio of an electrode active material layer within a battery by making a thickness of a separator thin.

Specifically, a weight average molecular weight (Mw) of the polyolefin may be 100,000 to 500,000 g/mol. When the weight average molecular weight of the polyolefin is less than the numerical range, it may become difficult to secure sufficient mechanical physical properties, and when it exceeds the numerical range, a shut down function may not be implemented or molding may become difficult. The shut down function means a function of blocking migration of ions and preventing thermal runaway of a battery by the thermoplastic resin melting and closing pores of the porous substrate when a temperature of a secondary battery becomes high.

The thickness of the porous substrate may be, for example, 3 to 50 *µ*m or 4 to 30 *µ*m. When the thickness of the porous substrate is less than the numerical range, a function of a conductive barrier may not be sufficient, and when it exceeds the numerical range, resistance of a separator may excessively increase.

An average diameter of pores included in the porous substrate may be, for example, 10 to 100 nm. Pores included in the porous substrate have a structure connected to each other so that a gas or a liquid can pass from one surface of the porous substrate to another surface.

A separator according to another embodiment of the present disclosure can improve mechanical strength and heat resistance of a separator for a secondary battery, and may comprise a coating layer disposed on at least one surface of the porous substrate to increase ionic conductivity within the secondary battery.

A coating layer according to the present disclosure may comprise a binder polymer and inorganic particles.

A binder polymer according to the present disclosure connects between inorganic particles and can stably fix them. The binder polymer may be, for example, one type selected from the group consisting of polyvinylidene fluoride-co-hexafluoropropylene, polyvinylidene fluoride-co-trichloroethylene, polymethylmethacrylate, polyacrylonitrile, polyvinylpyrrolidone, polyvinylacetate, poly(ethylene-co-vinyl acetate), polyethylene oxide, cellulose acetate, cellulose acetate butyrate, cellulose acetate propionate, cyanoethylpullulan, cyanoethylpolyvinylalcohol, cyanoethylcellulose, cyanoethylsucrose, pullulan, carboxyl methyl cellulose, acrylonitrile-styrene butadiene copolymer, polyimide, and styrene-butadiene rubber, or a mixture of two or more types thereof.

According to another embodiment of the present disclosure, a weight ratio of the inorganic particles and the binder polymer (inorganic particles:binder polymer) may be 50:50 to 99:1, and specifically, 70:30 to 95:5. When a content ratio of the inorganic particles to the binder polymer is less than the numerical range, a content of the binder polymer becomes large so that thermal safety improvement performance of a separator may be deteriorated, and pore size and porosity decrease due to a decrease in empty spaces formed between inorganic particles, which may cause performance deterioration of a final battery, and when it exceeds the numerical range, the content of the binder polymer is too small so that peeling resistance of the coating layer may be weakened.

Inorganic particles according to the present disclosure can contribute to improving mechanical strength and heat resistance of a separator for a secondary battery. Specifically, the inorganic particles are not particularly limited as long as they are electrochemically stable. That is, inorganic particles capable of being used in the present disclosure are not particularly limited as long as an oxidation and/or reduction reaction does not occur within an operating voltage range (for example, 0 to 5V based on Li/Li⁺) of an applied secondary battery. As an example, when inorganic particles having a high dielectric constant are used as inorganic particles, it is possible to improve ionic conductivity of an electrolyte solution by contributing to an increase in dissociation of an electrolyte salt, for example, a lithium salt, within a liquid electrolyte.

Due to the above-described reasons, the inorganic particles may be inorganic particles having a dielectric constant of 5 or more, inorganic particles having lithium-ion delivery capability, or a mixture thereof.

The inorganic particles having the dielectric constant of 5 or more may be one type or a mixture of two or more types selected from the group consisting of Al₂O₃, SiO₂, ZrO₂, AlO(OH), Al(OH)₃, Mg(OH)₂, BaSO₄, TiO₂, BaTiO₃, Pb(ZrₓTi₁₋ₓ)O₃(PZT, where 0<x<1), Pb₁₋ₓLaₓZr_{1-y}Ti_{y}O₃ (PLZT, where 0<x<1, 0 <y<1), (1-x)Pb(Mg_{1/3}Nb_{2/3})O₃₋ₓPbTiO₃ (PMN-PT, where 0<x<1), HfO₂, SrTiO₃, SnO₂, CeO₂, MgO, NiO, CaO, ZnO and SiC.

The inorganic particles having the lithium ion delivery capability may be one type or a mixture of two or more types selected from the group consisting of lithium phosphate (Li₃PO₄), lithium titanium phosphate (LiₓTi_{y}(PO₄)₃, 0<x<2, 0<y<3), lithium aluminum titanium phosphate (LiₓAl_{y}Ti_{z}(PO₄)₃, 0<x<2, 0<y<1, 0<z<3), (LiAlTiP)ₓO_{y} series glass (0<x<4, 0<y<13), lithium lanthanum titanate (LiₓLa_{y}TiO₃, 0<x<2, 0<y<3), lithium germanium thiophosphate (LiₓGe_{y}P_{z}S_{w}, 0<x<4, 0<y<1, 0<z<1, 0<w<5), lithium nitride (LiₓN_{y}, 0<x<4, 0<y<2), SiS₂ series glass (LiₓSi_{y}S_{z}, 0<x<3, 0<y<2, 0<z<4), and P₂S₅ series glass (LiₓP_{y}S_{z}, 0<x<3, 0<y<3, 0<z<7).

For example, an average particle diameter (D₅₀) of the inorganic particles may be 1 nm to 10 *µ*m for formation of a coating layer of a uniform thickness and an appropriate porosity, and specifically, may be 10 nm to 2 *µ*m, and more specifically, may be 50 nm to 1 *µ*m. The "average particle diameter (D₅₀)" means a particle diameter at a 50% point of a cumulative distribution of a number of particles according to a particle diameter. The average particle diameter can be measured using a laser diffraction method. Specifically, after dispersing a powder to be measured in a dispersion medium, it is introduced into a commercially available laser diffraction particle size measuring device (e.g., Microtrac S3500) to measure a difference in diffraction patterns according to particle size when particles pass through a laser beam, and a particle size distribution can be calculated.

Specifically, the thickness of the coating layer may be 0.1 to 10 *µ*m, and specifically, may be 1 to 3 *µ*m, and more specifically, may be 1.4 to 1.6 *µ*m. When the thickness of the coating layer satisfies the numerical range, insulation and thermal stability of a separator can be increased, and simultaneously, energy density of a battery can be improved.

### Electrolyte solution

An electrolyte solution according to the present disclosure may comprise a solvent and a lithium salt.

A solvent according to the present disclosure may comprise, for example, one or more selected from the group consisting of propylene carbonate (PC), ethylene carbonate (EC), diethyl carbonate (DEC), dimethyl carbonate (DMC), dipropyl carbonate (DPC), dimethyl sulfoxide (DMSO), acetonitrile (ACN), 1,2-dimethoxyethane (DME), 1,2-diethoxyethane, tetrahydrofuran (THF), N-methyl-2-pyrrolidone (NMP), ethyl methyl carbonate (EMC), gamma-butyrolactone (GBL), fluoroethylene carbonate (FEC), methyl formate, ethyl formate, propyl formate, methyl acetate (MA), ethyl acetate (EA), N-propyl acetate, pentyl acetate, methyl propionate, ethyl propionate, and butyl propionate.

A lithium salt according to the present disclosure may comprise, for example, anions such as NO₃⁻, F⁻, Cl⁻, Br⁻, I⁻, PF₆⁻, and the like.

### Applications

A secondary battery according to the present disclosure may be a cylindrical, prismatic, or pouch-type secondary battery, but is not particularly limited as long as it corresponds to a charge/discharge device.

Another embodiment of the present disclosure may provide a battery module comprising the secondary battery as a unit cell, and a battery pack comprising the same. The battery pack can be used, for example, as a power source of one or more medium-to-large sized devices selected from the group consisting of a power tool; electric vehicles including an electric vehicle (EV), a hybrid electric vehicle (HEV), and a plug-in hybrid electric vehicle (PHEV); or a system for power storage.

Hereinafter, embodiments of the present disclosure will be described in detail so that those skilled in the art to which the present disclosure pertains can easily carry them out, but this is only one example, and the scope of rights of the present disclosure is not limited by the following details.

### [Manufacturing Example 1: Manufacturing of composite]

### <Examples 1 to 4: Manufacturing method of composite not using both catalyst and binder (catalyst and binder Free)>

### Step of forming carbon clusters on reduced graphene oxide:

Based on an XRD analysis method, reduced graphene oxide having a full width at half maximum (FWHM) of 10.7 at a (002) crystal plane and a lateral size of 8.9 *µ*m was prepared. Here, the reduced graphene oxide has an oxygen content of 2% and a carbon content of 85% based on an elemental analyzer (EA) analysis method. The reduced graphene oxide was put into a chamber (internal atmosphere: high vacuum state of 10⁻⁶ Torr) into which nitrogen and argon gas were injected by a total of 150 sccm, and then a temperature was raised for 1 hour at a heating rate of 10°C/min under a nitrogen gas atmosphere to reach 600°C, and then the corresponding temperature was maintained for 1 hour to form carbon clusters. Next, the carbon clusters were air-cooled.

### Step in which carbon nanotubes are grown in the reduced graphene oxide in which the carbon clusters are formed:

By a chemical vapor deposition (CVD) method, carbon nanotubes of the reduced graphene oxide in which the air-cooled carbon clusters were formed were grown. Specifically, after injecting a gas (acetylene or methane) described in Table 1 below at 100 or 200 sccm, a temperature was raised for 1 hour and 20 minutes at a heating rate of 10°C/min at 800°C to finally manufacture a composite. As a result, the formed carbon clusters were grown into multi-walled carbon nanotubes having a length of 10 *µ*m.

Meanwhile, in Table 1 below, a weight ratio of graphene and carbon nanotubes within the composite was changed by adjusting an injection amount of the gas in the manufacturing method of the composite.

### <Comparative Examples 1, 3, 5, 6: Manufacturing method of composite using binder>

Based on an XRD analysis method, reduced graphene oxide having a full width at half maximum (FWHM) of 10.7 at a (002) crystal plane and a lateral size of 8.9 *µ*m was prepared.

Grown carbon nanotubes were formed using a chemical vapor deposition (CVD) method under process conditions described in Table 1 below.

A composite in a powder form was manufactured by adding the reduced graphene oxide, the grown carbon nanotubes having a feature of an aspect ratio of 1,000, and a binder (carboxymethyl cellulose, CMC) to a solvent (water) and then stirring and drying for 1 hour.

### <Comparative Examples 2, 4, 7, 8: Manufacturing method of composite using a catalyst>

Based on an XRD analysis method, reduced graphene oxide having a full width at half maximum (FWHM) of 10.7 at a (002) crystal plane and a lateral size of 8.9 *µ*m was prepared.

After coating catalyst particles (average particle diameter: 50 nm) described in Table 1 below on the reduced graphene oxide through an evaporation process, a gas (acetylene or methane) was injected into CVD equipment under the same conditions as above. At this time, the catalyst particles perform a role of a seed for growth of carbon nanotubes, and can dissolve carbon of the injection gas.

**[Table 1]**

| Classification | Gas Type | Gas Injection Amount (sccm) | Catalyst (Addition Amount) | Binder | Weight Ratio of Graphene and Carbon Nanotubes |
|---|---|---|---|---|---|
| Example 1 | Acetylene | 100 | X | X | 90:10 |
| Example 2 | Acetylene | 200 | X | X | 85:15 |
| Example 3 | Methane | 100 | X | X | 92:8 |
| Example 4 | Methane | 200 | X | X | 87:13 |
| Comparative Example 1 | Acetylene | 200 | X | Binder | 85:15 |
| Comparative Example 2 | Acetylene | 100 | Co | X | 81:19 |
| Comparative Example 3 | Methane | 100 | X | Binder | 90:10 |
| Comparative Example 4 | Methane | 200 | Co | X | 84:16 |
| Comparative Example 5 | Acetylene | 100 | X | Binder | 90:10 |
| Comparative Example 6 | Acetylene | 100 | X | Binder | 90:10 |
| Comparative Example 7 | Acetylene | 100 | Fe | X | 78:22 |
| Comparative Example 8 | Acetylene | 100 | Co | X | 79:21 |

### [Experimental Example: Performance Evaluation of Composite and Cell Applied with the Same]

### Evaluation Example 1: Impurity Content within Composite

The content of impurities within the composite is the total sum of the content of metallic impurities and the content of non-metallic impurities. Here, the content of metallic impurities is the sum total of metal ions analyzed through an inductively coupled plasma (ICP) analysis, and the content of non-metallic impurities is the sum total of element concentrations other than C and O among C, O, S, N, and H obtained through an EA analysis for the composite.

### Evaluation Example 2: Full Width at Half Maximum (FWHM) of Composite

Using an XRD analysis equipment (equipment name: LabX-6100 equipment of Shimadzu Co.), the full width at half maximum of a peak occurring at 20 to 30° of the composite (in powder form) was calculated under analysis conditions of raising a 20 section of 10 to 60° at 2°/min, and then it is shown in Table 2 below. Here, a 40 kV voltage and a Cu-Kα wavelength of 40 mA were used as measurement conditions of XRD.

### Evaluation Example 3: Powder Conductivity of Composite

Using a powder conductivity analysis equipment (Powder Resistivity Measurement System) of Hantech Co., the powder conductivity of the composite was measured under a pressure condition of 20 kN.

### Evaluation Example 4: Ratio (I_{d}/I_{g}) of Intensity (I_{d}) of D-band to Intensity (I_{g}) of G-band of Composite

Using a Raman spectroscopy analysis equipment (Confotec MR520 equipment) of Sol Co., after irradiating light of a wavelength of 532 nm to the composite, the scattered wavelength was calculated as a Raman shift value. Specifically, by measuring a ratio of peak values occurring around 1,350 cm⁻¹ and 1,580 cm⁻¹, the ratio (I_{d}/I_{g}) of the intensity (I_{d}) of the D-band to the intensity (I_{g}) of the G-band of the composite is shown in Table 2 below.

### Evaluation Example 5: Powder Density of Composite

Using a BT-302 tap density volumeter of Bettersize Co., the powder density of the composite was measured after tapping the bottom once per second for 30 minutes.

### Evaluation Example 6: Characteristic Evaluation of Cell Applied with Composite

After mixing the composite (conductive material), a positive electrode active material (NCM), and a binder for an electrode (polyvinylidene fluoride, PVDF) in a weight ratio of 2:95:3, they were added to a solvent (N-methyl 2-pyrrolidone, NMP) to manufacture a positive electrode slurry in which a total solid content is 70 wt%. After coating the positive electrode slurry on a positive electrode current collector (aluminum) having a thickness of 10 *µ*m, it was dried at 90°C for 30 minutes to manufacture a positive electrode. Lithium metal (Li metal) was used as a negative electrode, a separator made of a polyethylene material (thickness: 80 *µ*m) was used as a separator, and an electrolyte solution (1.3 mol LiPF₆ EC:EMC=3:7(v/v)+FEC 5%) was injected to manufacture a coin-type half-cell. The internal resistance of the half-cell was measured using a cell internal resistance analysis method (Direct Current Internal Resistance, DCIR), and then the results are shown in Table 2 below.

**[Table 2]**

| Classification | Total Impurity Content (ppm) | XRD FWHM (2θ=20-30°) | Powder Conductivity (S/cm) | Raman ratio (I_{d}/I_{g}) | Powder Density (g/cm³) | Cell Internal Resistance (DCIR=Ω) |
|---|---|---|---|---|---|---|
| Example 1 | 147 | 12.4 | 255 | 0.74 | 0.71 | 4.5 |
| Example 2 | 130 | 12.2 | 296 | 0.78 | 0.59 | 4.9 |
| Example 3 | 479 | 10.2 | 220 | 0.82 | 0.88 | 6.6 |
| Example 4 | 328 | 9.8 | 208 | 0.84 | 0.92 | 7.3 |
| Comparative Example 1 | 1,240 | 3.2 | 131 | 1.10 | 1.10 | 9.8 |
| Comparative Example 2 | 1,480 | 4.8 | 174 | 1.02 | 1.01 | 8.8 |
| Comparative Example 3 | 1,280 | 5.6 | 112 | 1.12 | 1.21 | 10.2 |
| Comparative Example 4 | 1,390 | 6.4 | 138 | 1.08 | 1.07 | 9.2 |
| Comparative Example 5 | 1,720 | 4.1 | 115 | 1.14 | 1.18 | 31.2 |
| Comparative Example 6 | 2,130 | 3.8 | 120 | 1.16 | 1.16 | 30.8 |
| Comparative Example 7 | 1,630 | 3.1 | 121 | 1.18 | 1.16 | 24.6 |
| Comparative Example 8 | 1,720 | 2.9 | 124 | 1.21 | 1.14 | 25.4 |

With reference to Table 2, it can be confirmed that Examples 1 to 4 satisfy the ratio (I_{d}/I_{g}) of the intensity (I_{d}) of the D-band to the intensity (I_{g}) of the G-band of the composite being 1.00 or less compared to Comparative Examples 1 to 8, so that internal resistance of a cell applied with the composite is lowered. In Table 2, it can be confirmed that Examples 1 to 4 satisfy the powder conductivity of the composite being 180 S/cm or more compared to Comparative Examples 1 to 8, so that internal resistance of a cell applied with the composite is lowered.

In Table 2, it can be confirmed that Examples 1 to 4 satisfy the content of impurities within the composite being 1,200 ppm or less compared to Comparative Examples 1 to 8, so that internal resistance of a cell applied with the composite is lowered.

In Table 2, comparing Examples 1 to 4 in terms of internal resistance of a cell according to the content of impurities within the composite, it can be confirmed that in Examples 1 and 2, internal resistance of a cell is lowered as the content of impurities is lowered to 328 ppm or less compared to Examples 3 and 4.

In Table 2, comparing Examples 1 to 4 in terms of internal resistance of a cell according to powder conductivity within a composite, it can be confirmed that in Examples 1 and 2, internal resistance of a cell is further lowered as powder conductivity of 230 S/cm or more is satisfied compared to Examples 3 and 4.

In Table 2, comparing Examples 1 to 4 in terms of internal resistance of a cell according to the ratio (I_{d}/I_{g}) of the intensity (I_{d}) of the D-band to the intensity (I_{g}) of the G-band of the composite, it can be confirmed that in Examples 1 and 2, internal resistance of a cell is further lowered by satisfying the ratio (I_{d}/I_{g}) of the intensity (I_{d}) of the D-band to the intensity (I_{g}) of the G-band being 0.80 or less compared to Examples 3 and 4.

Specifically, because Examples 1 and 2 use acetylene as a CVD gas, formation of carbon nanotubes can be easily performed compared to Examples 3 and 4 using methane composed of a single bond. Accordingly, the powder conductivity of the composite can be increased, and internal resistance of a cell can be lowered simultaneously with I_{d}/I_{g} being lowered.

On the other hand, in the case of Comparative Examples 1, 3, 5, and 6 using a binder for a role of connecting graphene and carbon nanotubes, a problem in which the powder conductivity of the composite is lowered may occur because the binder itself acts as an insulator, and accordingly internal resistance of a cell was increased. Also, in the case of Comparative Examples 2, 4, 7, and 8 using a catalyst, oxidation of catalyst particles remaining in a process of removing the catalyst particles occurs so that the powder conductivity of the composite may be lowered, and accordingly a problem in which internal resistance of a cell increases may occur.

It was confirmed that the powder density of the composite according to Examples 1 to 4 is lowered to 1.00 g/cm³ or less compared to the composite according to Comparative Examples 1 to 9, so that a distance between graphenes becomes farther and a carbon nanotube content between graphene surfaces increases, whereby re-agglomeration of graphene can be prevented during electrode formation, and an effect of improving powder conductivity is implemented when utilized as a conductive material.

Although the preferred embodiments of the present disclosure have been described in detail above, the scope of rights of the present disclosure is not limited thereto, and various modifications and improvements by those skilled in the art using the basic concept of the present disclosure defined in the following claims also fall within the scope of rights of the present disclosure.

## Claims

1. A composite, comprising:
graphene; and
carbon nanotubes on the graphene,
wherein a ratio (I_{d}/I_{g}) of an intensity (I_{d}) of a D-band to an intensity (I_{g}) of a G-band of the composite as measured by Raman spectroscopy is 1.00 or less.

2. The composite of claim 1, wherein, based on an X-ray diffraction (XRD) analysis method, the graphene has a full width at half maximum (FWHM) of 6.5 to 20 at a (002) crystal plane.

3. The composite of claim 1, wherein a thickness of the graphene is 1 to 100 nm.

4. The composite of claim 1, wherein the carbon nanotubes comprise at least one of single-walled carbon nanotubes and multi-walled carbon nanotubes.

5. The composite of claim 1, wherein a length of the carbon nanotubes is 10 to 20,000 nm.

6. The composite of claim 1, wherein a ratio of a length of the graphene and a length of the carbon nanotubes is 1:2 to 1:50,000.

7. The composite of claim 1, wherein a weight ratio of the graphene and the carbon nanotubes is 99:1 to 80:20.

8. The composite of claim 1, wherein the graphene and the carbon nanotubes are directly connected.

9. The composite of claim 1, wherein a bonding angle of the graphene and the carbon nanotubes is 1 to 90°.

10. The composite of claim 1, wherein a powder density of the composite is 1.00 g/cm³ or less.

11. A composite, comprising:
graphene; and
carbon nanotubes on the graphene,
wherein a powder conductivity of the composite is 180 S/cm or more.

12. A composite, comprising:
graphene; and
carbon nanotubes on the graphene,
wherein an impurity content of the composite is 1,200 ppm or less.

13. A conductive material comprising the composite according to any one of claims 1 to 12.

14. An electrode comprising the conductive material of claim 13.

15. A secondary battery comprising:
a first electrode;
a second electrode;
a separator interposed between the first electrode and the second electrode; and
an electrolyte solution,
wherein at least one of the first electrode and the second electrode comprises the electrode of claim 14.
